(19) Europäisches Patentamt
European Patent Office
Office européen des brevets

(11) **EP 4 657 537 A1**

(12) **EUROPEAN PATENT APPLICATION**
published in accordance with Art. 153(4) EPC

(43) Date of publication:
**03.12.2025 Bulletin 2025/49**

(21) Application number: **23918679.4**

(22) Date of filing: **27.12.2023**

(51) International Patent Classification (IPC):
*H01M 4/13* (2010.01)     *H01M 4/62* (2006.01)
*H01M 4/131* (2010.01)     *H01M 4/485* (2010.01)
*H01M 4/505* (2010.01)     *H01M 4/525* (2010.01)
*H01M 10/052* (2010.01)     *H01M 10/0562* (2010.01)

(52) Cooperative Patent Classification (CPC):
**H01M 4/13; H01M 4/131; H01M 4/485;**
**H01M 4/505; H01M 4/525; H01M 4/62;**
**H01M 10/052; H01M 10/0562;** Y02E 60/10

(86) International application number:
**PCT/JP2023/046862**

(87) International publication number:
**WO 2024/157725 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.01.2023 JP 2023009120**

(71) Applicant: **Maxell, Ltd.**
**Kyoto 618-8525 (JP)**

(72) Inventors:
• **TOMITA, Kentaro**
**Otokuni-gun, Kyoto 618-8525 (JP)**
• **SHINTANI, Ayako**
**Otokuni-gun, Kyoto 618-8525 (JP)**
• **KAMIZORI, Haruki**
**Otokuni-gun, Kyoto 618-8525 (JP)**

(74) Representative: **Diehl & Partner**
**Patent- und Rechtsanwaltskanzlei mbB**
**Erika-Mann-Straße 9**
**80636 München (DE)**

(54) **ELECTRODE FOR ALL-SOLID-STATE SECONDARY BATTERIES, AND ALL-SOLID-STATE SECONDARY BATTERY**

(57)     Provided are an all-solid-state secondary battery that has a low internal resistance, and an electrode for constituting the all-solid-state secondary battery. The all-solid-state secondary battery of the present invention is related to Goals 3, 7, 11, and 12 of the SDGs.

The electrode for an all-solid-state secondary battery according to the present invention is an electrode for an all-solid-state secondary battery, the all-solid-state secondary battery having a solid electrolyte layer, the electrode including a molded body made of an electrode mixture containing an electrode active material, a conductive assistant, and a solid electrolyte, wherein the electrode active material has a particle size $D_{90}$ of 1.5 $\mu$m or less, and $0.4 \leq B/A \leq 1.5$ is satisfied, where A ($\mu$m) is an average particle size $D_{50}$ of the electrode active material, and B ($\mu$m) is an average particle size $D_{50}$ of the conductive assistant. Also, the all-solid-state secondary battery according to the present invention includes: a positive electrode; a negative electrode; and a solid electrolyte layer interposed between the positive electrode and the negative electrode, wherein at least one of the positive electrode and the negative electrode is the electrode for an all-solid-state secondary battery.

FIG. 1

## Description

Technical Field

The present invention relates to an all-solid-state secondary battery that has a low internal resistance, and an electrode for constituting the all-solid-state secondary battery.

Background Art

In recent years, the development of portable electronic devices such as cellular phones and laptop personal computers, the practical use of electric vehicles, and the like have required compact and lightweight batteries that have a high capacity and a high energy density.

Currently, in lithium secondary batteries, especially in lithium-ion secondary batteries, that can meet this demand, a lithium-containing composite oxide such as lithium cobalt oxide ($LiCoO_2$) or lithium nickel oxide ($LiNiO_2$) is used as a positive electrode active material, graphite or the like is used as a negative electrode active material, and an organic electrolyte solution containing an organic solvent and a lithium salt is used as a nonaqueous electrolyte.

Due to further development of devices that use lithium-ion secondary batteries, there is a demand for developing lithium-ion secondary batteries having an increased life-span, a higher capacity, and a higher energy density, and a high degree of reliability is also required for developing the lithium-ion secondary batteries having an increased life-span, a higher capacity, and a higher energy density.

However, since an organic electrolyte solution used in a lithium-ion secondary battery contains a flammable organic solvent, the organic electrolyte solution may abnormally generate heat when an abnormal situation such as a short circuit occurs in the battery. In recent years, as the energy density of lithium-ion secondary batteries and the amount of organic solvent in the organic electrolyte solution have increased, there is growing need for reliability in lithium-ion secondary batteries.

Under these circumstances, all-solid-state lithium secondary batteries (all-solid-state secondary batteries) not using organic solvents have also been considered. An all-solid-state lithium secondary battery includes, instead of conventional organic solvent-based electrolytes, a molded body made of a solid electrolyte in which no organic solvents are used, and is highly reliable because there is no risk of the solid electrolyte abnormally generating heat.

Also, all-solid-state secondary batteries are very safe as well as being highly reliable and highly environmentally resistant, and have an increased life-span. Therefore, it is anticipated that all-solid-state secondary batteries will become maintenance-free batteries that can continue to contribute to the development of society, as well as to safety and security. Providing all-solid-state secondary batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

Conventionally, in order to improve characteristics of such secondary batteries, for example, many attempts have been made to control particle sizes of components such as active materials and conductive assistants contained in the electrodes (Patent Documents 1 to 3 and the like).

Prior Art Documents

Patent Document

[Patent Document 1] JP H10-199507A
[Patent Document 2] JP 2013-33641A
[Patent Document 3] JP 2021-44195A

Disclosure of Invention

Problem to be Solved by the Invention

Incidentally, it is desirable that the internal resistance of an all-solid-state secondary battery is low from the viewpoint of enhancing various characteristics, and the resistance of the electrodes is reduced in order to achieve this, for example.

In lithium ion secondary batteries in which a nonaqueous electrolyte solution is used, effective means for shortening the diffusion distance of lithium ions inside an active material and reducing the resistance of an electrode include coating the active material with carbon and increasing the amount of conductive assistant added to the electrode.

However, in all-solid-state secondary batteries in which a liquid medium is not used and lithium ions are not diffused through the liquid medium, a carbon coating layer on the surface of the active material and the conductive assistant in the electrode inhibit ion conduction at the interface between the active material and the solid electrolyte in the electrode, and thus the use of such means ends up increasing the resistance of the electrode.

Therefore, in all-solid-state secondary batteries in which no nonaqueous electrolyte solution is used, there is a demand for the development of technology that reduces internal resistance by means other than those described above.

The present invention has been accomplished in view of the circumstances described above, and it is an object of the present invention to provide an all-solid-state secondary battery that has a low internal resistance, and an electrode for constituting the all-solid-state secondary battery.

Means for Solving Problem

The electrode for an all-solid-state secondary battery according to the present invention is an electrode for an all-solid-state secondary battery, the all-solid-state secondary battery having a solid electrolyte layer, the electrode including a molded body made of an electrode mixture that contains an electrode active material, a conductive assistant, and a solid electrolyte, wherein the electrode active material has a particle size $D_{90}$ of 1.5 $\mu$m or less, and $0.4 \leq B/A \leq 1.5$ is satisfied, where A ($\mu$m) is an average particle size $D_{50}$ of the electrode active material, and B ($\mu$m) is an average particle size $D_{50}$ of the conductive assistant.

Also, the all-solid-state secondary battery according to the present invention includes: a positive electrode; a negative electrode; and a solid electrolyte layer interposed between the positive electrode and the negative electrode, wherein at least one of the positive electrode and the negative electrode is the electrode for an all-solid-state secondary battery according to the present invention.

Effects of the Invention

According to the present invention, it is possible to provide an all-solid-state secondary battery that has a low internal resistance, and an electrode for constituting the all-solid-state secondary battery.

Brief Description of Drawings

[FIG. 1] It is a cross-sectional view schematically showing an example of an all-solid-state secondary battery according to the present invention.

[FIG. 2] It is a plan view schematically showing another example of an all-solid-state secondary battery according to the present invention.

[FIG. 3] It is a cross-sectional view taken along the line I-I shown in FIG. 2.

Description of the Invention

<Electrode for All-Solid-State Secondary Battery>

An electrode for an all-solid-state secondary battery according to the present invention (may be simply referred to as an "electrode" hereinafter) is to be used in an all-solid-state secondary battery having a solid electrolyte layer, the electrode including a molded body made of an electrode mixture containing an electrode active material, a conductive assistant, and a solid electrolyte. In the electrode according to the present invention, the electrode active material has a particle size $D_{90}$ of 1.5 $\mu$m or less, and $0.4 \leq B/A \leq 1.5$ is satisfied, where A ($\mu$m) is an average particle size $D_{50}$ of the electrode active material, and B ($\mu$m) is an average particle size $D_{50}$ of the conductive assistant.

The studies by the inventors of the present invention have revealed that, when a volume-based particle size distribution of an electrode active material is close to a volume-based particle size distribution of a conductive assistant in the electrode having a molded body made of an electrode mixture containing the electrode active material, the conductive assistant, and a solid electrolyte, i.e., when the A value, which is the average particle size $D_{50}$ of the electrode active material, and the B value, which is the average particle size $D_{50}$ of the conductive assistant, are relatively close to each other, electron conduction paths and ion conduction paths in the molded body made of the electrode mixture can be well formed.

Further, on the other hand, it has also been revealed that even when the A value and the B value are relatively close to each other, if the particles of the electrode active material are large, it is difficult to reduce the resistance of the electrode.

In view of this, in the present invention, it is possible to reduce the electrode resistance by adjusting the $D_{90}$ of the electrode active material to a specific value or less and controlling the B/A value within a specific range. Thus, a battery in which the electrode of the present invention is used (the all-solid-state secondary battery according to the present invention) can have a low internal resistance and exhibit an excellent discharge property.

The particle sizes $D_{90}$ and $D_{50}$ of the electrode active material refer to a 90% diameter value and a 50% diameter value, respectively, in a volume-based cumulative fraction when an integral volume is calculated in order from the smallest particle size. Further, the average particle size $D_{50}$ of the conductive assistant also refers to a 50% diameter value in a volume-based cumulative fraction when an integral volume is calculated in order from the smallest particle size.

The $D_{90}$ and $D_{50}$ (A value) of the electrode active material used in the present specification are values determined using the following method (the numerical values described in the Examples are values determined using the device and software described below). The particle size distribution for determining the $D_{90}$ and $D_{50}$ of the electrode active material can be obtained by sampling all particles attributed to the electrode active material and not in contact with the edge of an image among particles present in the scanning electron microscope (SEM) image (at a magnification from 5000 times to 10000 times) at any multiple points in a cross section of a sample piece produced through focused ion beam (FIB) processing, or on a cross section of a molded body made of an electrode mixture produced through cross-sectional processing using an ion milling device (IM4000 manufactured by Hitachi High-Tech Corporation) after the battery is cut. The number of observation fields is set such that the number of observed particles of the electrode active material is 3000 or more. The particles of the electrode active material in the SEM image can be confirmed through any of the following methods: energy dispersive X-ray spectroscopy (EDS) mapping analysis, electron probe micro analyzer (EPMA) analysis, and time-of-flight secondary ion mass (TOF-SIMS) mapping analysis. An apparent particle size D'(n) of the nth particle of the electrode active material is equal to the diameter of a circle having an area equivalent to a cross-sectional area of the nth particle of the electrode active material. The particle size $D(n)(= D'(n)/\sqrt{(2/3)})$ of the nth particle of the electrode active material is calculated taking into consideration that the average diameter of the circles in a cross section when a sphere is cut at any depth from the outermost surface is $\sqrt{(2/3)}$ times the diameter D of the sphere. A volume-based particle size distribution (histogram) can be created by multiplying the frequency of each particle size obtained, by a volume V(n) of the particle, and dividing the resultant by the sum of V(n).

Image analysis software can be used to sample the electrode active material particles. Specifically, "ImageJ" is used to analyze a histogram of contrast of the image, a contrast region to which particles attributed to the electrode active material belong is selected through the EDS mapping analysis or the like as described above, and then the image is binarized. The binarized image is subjected to a single instance of each of contraction processing and expansion processing in the above order twice, then Fill Halls processing is performed once, and contraction processing is performed once, after which adjacent particles are divided at a watershed. By analyzing particles with an area of 0.005 ($\mu m^2$) or more using the "Analyze Particles" option, 3000 or more particles can be sampled (at this time, particles in contact with the edge of the image are excluded).

The volume-based particle size distribution of the electrode active material obtained in this manner is plotted with the particle size on the horizontal axis and cumulative frequency on the vertical axis, and the $D_{90}$ and $D_{50}$ are calculated from the particle sizes at a cumulative frequency of 90% and 50%.

The $D_{50}$ (B value) of the conductive assistant used in the present specification is a value that can be determined through analysis in the same manner as for the electrode active material, except that the binarized image is not subjected to the Fill Halls processing or the operation of dividing adjacent particles at a watershed, and the number of particles of the conductive assistant sampled is 700 or more.

If the ratio B/A of the B value, which is the $D_{50}$ of the conductive assistant, to the A value, which is the $D_{50}$ of the electrode active material, is too small, the conductive assistant may be likely to enter farther between solid electrolyte particles in the molded body made of the electrode mixture, prevent their contact, and inhibit ion conduction. Also, if the B/A value is too large, the shortest distance paths for electron conduction in the molded body made of the electrode mixture may be insufficient in number. Therefore, from the viewpoint of favorably forming ion conduction paths and electron conduction paths in the molded body made of the electron mixture, the B/A value is 0.4 or more, preferably 0.5 or more, and is 1.5 or less, and preferably 1.4 or less.

If the electrode active material contained in the molded body made of the electron mixture is too large, the concentration of stress may locally occur inside the molded body made of the electrode mixture when the volume of the electrode active material changes due to the battery being charged and discharged, and the internal structure of the molded body may be destroyed, and the resistance will increase. Furthermore, the larger the electrode active material, the longer the diffusion distance of ions inside the electrode active material, and thus resistance will increase. Therefore, from the viewpoint of suppressing an increase in resistance caused by these, the $D_{90}$ of the electrode active material is 1.5 $\mu$m or less, and preferably 1.2 $\mu$m or less. If the electrode active material contained in the molded body made of the electrode mixture is too small, the active material particles may form aggregates, as a result of which the resistance reducing effect may deteriorate. Therefore, from the viewpoint of forming a uniform interface between solid electrolyte particles and active material particles and more effectively exhibiting the resistance reducing effect, the $D_{90}$ of the electrode active material is preferably 0.3 $\mu$m or more, and more preferably 0.4 $\mu$m or more.

From the viewpoint of forming a uniform interface between the solid electrolyte particles and the active material particles and effectively exhibiting the resistance reducing effect, the A value ($D_{50}$) of the electrode active material is preferably 0.1 $\mu$m or more, and more preferably 0.2 $\mu$m or more, and from the viewpoint of reducing the average diffusion length of ions inside the electrode active material and thereby reducing resistance, is preferably 1.1 $\mu$m or less, and more preferably 0.9 $\mu$m or less. From the viewpoint of the assistant particles further improving ion conduction between solid electrolyte particles, the B value ($D_{50}$) of the conductive assistant is preferably 0.04 $\mu$m or more, and more preferably 0.08 $\mu$m or more, and from the viewpoint of favorably forming the shortest distance electron conduction paths in electrodes, is preferably 1.65 $\mu$m or less, and more preferably 1.35 $\mu$m or less.

The electrode of the present invention includes a molded body formed from an electrode mixture that contains an electrode active material, a conductive assistant, and a solid electrolyte. Examples include a molded body (a pellet or the like) formed by molding the electrode mixture, a molded body having a structure in which a layer (an electrode mixture layer) constituted by a molded body made of the electrode mixture is formed on a current collector, and the like.

The electrode of the present invention can be used as a positive electrode of an all-solid-state secondary battery, and can also be used as a negative electrode of an all-solid-state secondary battery.

In a case where the electrode of the present invention is used as a positive electrode in an all-solid-state secondary battery, as particles of the electrode active material, particles of an active material capable of absorbing and desorbing lithium ions that is the same as those used in conventionally known lithium ion secondary batteries can be used. Specifically, it is possible to use particles of one or more of various types of positive electrode active materials used in conventionally known non-aqueous electrolyte secondary batteries such as: a spinel-type lithium manganese composite oxide represented by $LiM_rMn_{2-r}O_4$, where M represents at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and r satisfies $0 \leq r \leq 1$; a layered compound represented by $Li_rMn_{(1-s-r)}Ni_sM_tO_{(2-u)}F_v$, where M represents at least one element selected from the group consisting of Co, Mg, Al, B, Ti, V, Cr, Fe, Cu, Zn, Zr, Mo, Sn, Ca, Sr, and W, and r, s, t, u, and v satisfy $0.8 \leq r \leq 1.2$, $0 < s < 0.5$, $0 \leq t \leq 0.5$, $u + v < 1$, $-0.1 \leq u \leq 0.2$, and $0 \leq v \leq 0.1$; a lithium cobalt composite oxide represented by $LiCo_{1-r}M_rO_2$, where M represents at least one element selected from the group consisting of Al, Mg, Ti, V, Cr, Zr, Fe, Ni, Cu, Zn, Ga, Ge, Nb, Mo, Sn, Sb, and Ba, and r satisfies $0 \leq r \leq 0.5$; a lithium nickel composite oxide represented by $LiNi_{1-r}M_rO_2$, where M represents at least one element selected from the group consisting of Al, Mg, Ti, Zr, Fe, Co, Cu, Zn, Ga, Ge, Nb, Mo, Sn, Sb, and Ba, and r satisfies $0 \leq r \leq 0.5$; an olivine-type composite oxide represented by $Li_{1+s}M_{1-r}N_rPO_4F_s$, where M represents at least one element selected from the group consisting of Fe, Mn, and Co, N represents at least one element selected from the group consisting of Al, Mg, Ti, Zr, Ni, Cu, Zn, Ga, Ge, Nb, Mo, Sn, Sb, V, and Ba, and r and s satisfy $0 \leq r \leq 0.5$ and $0 \leq s \leq 1$; and a pyrophosphate compound represented by $Li_2M_{1-r}N_rP_2O_7$, where M represents at least one element selected from the group consisting of Fe, Mn, and Co, N represents at least one element selected from the group consisting of Al, Mg, Ti, Zr, Ni, Cu, Zn, Ga, Ge, Nb, Mo, Sn, Sb, V, and Ba, and r satisfies $0 \leq r \leq 0.5$.

In the case where the electrode of the present invention is used as the positive electrode, in the electrode active material (positive electrode active material), from the viewpoint of favorably suppressing a side reaction of the solid electrolyte, a reaction suppressing layer for suppressing a reaction with the solid electrolyte may be formed on the surface of the electrode active material.

The reaction suppressing layer is only required to be made of a material that has ion conductivity and can suppress a reaction between the electrode active material (positive electrode active material) particles and the solid electrolyte. As a material that can constitute the reaction suppressing layer, an oxide that contains Li and at least one element selected from the group consisting of Nb, P, B, Si, Ge, Ti, Zr, Ta, and W can be used. More specific examples include an Nb-containing oxide such as $LiNbO_3$, as well as $Li_3PO_4$, $Li_3BO_3$, $Li_2SO_4$, $Li_4SiO_4$, $Li_4GeO_4$, $LiTiO_3$, $LiZrO_3$, $Li_2WO_4$, and the like. The reaction suppressing layer may contain only one of these oxides, two or more of these oxides, or a composite compound formed by two or more of these oxides. Among these oxides, it is preferable to use an Nb-containing oxide, and more preferably $LiNbO_3$.

Preferably, 0.1 to 2.0 parts by mass of the reaction suppressing layer is present on the surface of the electrode active material relative to 100 parts by mass of the electrode active material. When the amount of the reaction suppressing layer is within this range, it is possible to favorably suppress a reaction between the solid electrolyte and particles of the electrode active material.

The reaction suppressing layer can be formed on the surface of the electrode active material using a method such as a sol-gel method, a mechano-fusion method, a CVD method, a PVD method, an ALD method, or the like.

In the case where the electrode of the present invention is used as the negative electrode, as the negative electrode active material, for example, a carbon material such as graphite; a simple substance, a compound (an oxide or the like), or an alloy that contains an element such as Si, Sn, Ge, Bi, Sb, or In; a compound capable of charging and discharging at a low voltage close to that of a lithium metal such as a lithium-containing nitride or a lithium-containing oxide (a lithium titanium oxide such as $Li_4Ti_5O_{12}$, a niobium composite oxide such as $TiNb_2O_7$, a tungsten oxide, a molybdenum oxide, a vanadium oxide, or the like); or the like can be used.

Further, in both a case where the electrode is a positive electrode and a case where the electrode is a negative electrode, a niobium composite oxide (A) containing at least two elements selected from the group consisting of Cu, Zn, Al, W, Fe, and Ti can be used as the electrode active material. Further, the niobium composite oxide is preferably of the monoclinic type, which is advantageous for improving an output characteristic of the battery.

In both the case where the electrode is a positive electrode and the case where the electrode is a negative electrode, a monoclinic niobium composite oxide (B) represented by the following general formula (1) can be used as the electrode active material, which is also advantageous in improving an output characteristic of the electrode.

$$A_yM^1_\alpha Al_{x-\alpha}Nb_{12-x-z}M^2_zO_{29-\delta} \qquad (1)$$

In the general formula (1), A represents at least one element out of Li and Na, $M^1$ represents at least one element selected from the group consisting of Fe, Mn, Zn, Cu, Ag, Mg, Ca, Sr, Ba, Co, Eu, Y, Bi, La, Ce, Nd, Sm, and Gd, and $M^2$ represents at least one element selected from the group consisting of K, Ti, Ni, Zr, V, Mo, Ta, and W, and x, y, z, $\delta$, and $\alpha$ satisfy $0 < x \le 1.1$, $0 \le y \le 24$, $0 \le z \le 2$, $-1 \le \delta \le 2$, and $0 < \alpha \le 0.4x$.

The element $M^1$, namely Fe ($Fe^{2+}$), Mn ($Mn^{2+}$), Zn ($Zn^{2+}$), Cu ($Cu^+$, $Cu^{2+}$), Ag ($Ag^+$), Mg ($Mg^{2+}$), Ca ($Ca^{2+}$), Sr ($Sr^{2+}$), Ba ($Ba^{2+}$), Co ($Co^{2+}$), Eu ($Eu^{2+}$, $Eu^{3+}$), Y ($Y^{3+}$), Bi ($Bi^{3+}$), La ($La^{3+}$), Ce ($Ce^{3+}$, $Ce^{4+}$), Nd ($Nd^{3+}$), Sm ($Sm^{3+}$), and Gd ($Gd^{3+}$) have larger effective ionic radii than Nb ($Nb^{5+}$) and Al ($Al^{3+}$). The niobium composite oxide (B) represented by the general formula (1) includes $AlNb_{11}O_{29}$ as a base component, and a portion of the Al is substituted with the element $M^1$, and accordingly, the niobium composite oxide (B) has a larger crystal lattice constant than $AlNb_{11}O_{29}$ and diffusibility of ions of the element A inside the oxide is increased. Therefore, an output characteristic of the all-solid-state secondary battery constructed using the electrode containing the niobium composite oxide (B) as the electrode active material is improved.

Al in $AlNb_{11}O_{29}$ has a function of stabilizing the crystal structure thereof, and it is conceivable that the crystal structure of the oxide may be impaired as a result of a portion of Al being substituted with the element $M^1$. It is expected that, consequently, the capacity of the all-solid-state secondary battery constructed using this oxide as an active material is more likely to decrease when the battery is repeatedly charged and discharged (charge/discharge cycle characteristics deteriorate).

However, contrary to this expectation, when the amount of Al substituted by the element $M^1$ is within a certain range as represented by the above general formula (1), a reduction in the capacity caused by repeated charging and discharging can be more favorably suppressed in the all-solid-state secondary battery constructed using this oxide as an active material, when compared with the case where $AlNb_{11}O_{29}$ is used. This is presumably because inclusion of the element $M^1$ having a larger ionic radius than Nb ($Nb^{5+}$) and Al ($Al^{3+}$) increases the lattice constant of the oxide before ions of the element A, which serve as carriers, are inserted, and thus a space into which ions of the element A are occluded is enlarged, and a change in the volume of the oxide (active material) can be suppressed when ions of the element A are inserted or released during charging and discharging, and therefore, degradation of the electrode can be suppressed even when the all-solid-state secondary battery is repeatedly charged and discharged.

As described above, use of the electrode containing the niobium composite oxide (B) as the electrode active material makes it possible to improve an output characteristic of the all-solid-state secondary battery while maintain high charge/discharge cycle characteristics.

The niobium composite oxide (B) represented by the general formula (1) may contain, as the element $M^1$, only one element or two or more elements selected from Fe, Mn, Zn, Cu, Ag, Mg, Ca, Sr, Ba, Co, Eu, Y, Bi, La, Ce, Nd, Sm, and Gd. Out of these elements $M^1$, Fe, Mn, Zn, and Cu are preferable, and Zn and Cu are more preferable because it is particularly easy to substitute Al with these elements because of electron arrangement, and these elements have a high effect of increasing electron conductivity of the niobium composite oxide (B).

In a case where the niobium composite oxide (B) represented by the general formula (1) includes an element that has a plurality of valencies, such as $Fe^{3+}/Fe^{2+}$ or $Cu^{2+}/Cu^+$, as the element $M^1$, large oxygen deficiency may occur (i.e., $\delta$ in the general formula (1) may be more than 0), and consequently, electron conductivity and ion conductivity of the niobium composite oxide (B) represented by the general formula (1) are further improved. Therefore, further improvement of the output characteristic of the all-solid-state secondary battery can be expected in the case where the oxide represented by the general formula (1) includes Fe or Cu as the element $M^1$.

The niobium composite oxide (B) represented by the general formula (1) may also include at least one element $M^2$ selected from the group consisting of K, Ti, Ni, Zr, V, Mo, Ta, and W, other than the element $M^1$ substituting a portion of Al. In the niobium composite oxide (B) represented by the general formula (1) and having the monoclinic crystal structure, these elements $M^2$ are components that do not substitute a portion of Al constituting the crystal, but substitute Nb, or components that are contained in the crystal as impurities or forming a solid solution. The oxide represented by the general formula (1) does not have to include the element $M^2$, and the amount z of the element $M^2$ may be 0. In a case where the oxide includes the element $M^2$, inclusion of the element $M^2$ in an amount z of 2 or less does not affect properties of the niobium composite oxide (B), and thus is allowable. Also, the niobium composite oxide (B) represented by the general formula (1) may contain moisture.

In the niobium composite oxide (B) represented by the general formula (1), Al is a component for increasing structural stability of the niobium composite oxide (B), and this function of Al improves reversibility of the electrode active material during charging and discharging of the all-solid-state secondary battery.

In the niobium composite oxide (B) represented by the general formula (1), a portion of Al is substituted with the element $M^1$ as described above, and the total x of the amount of Al and the amount of the element $M^1$ is more than 0, and preferably 0.8 or more from the viewpoint of making Al and the element $M^1$ more effectively exhibit their functions described above. However, if the amounts of Al and the element $M^1$ in the niobium composite oxide (B) are too large, there is a risk that the amount of Nb in the niobium composite oxide (B) will be too small and its function will not be effectively exhibited. Therefore, the total x of the amount of Al and the amount of the element $M^1$ is preferably 1.1 or less, and more preferably 1.05 or less.

In the niobium composite oxide (B) represented by the general formula (1), the amount $\alpha$ of the element $M^1$ is more than 0, and preferably 0.05 or more from the viewpoint of more effectively obtaining the effect of increasing the output characteristics of the all-solid-state secondary battery. However, if the amount of the element $M^1$ in the niobium composite oxide (B) represented by the general formula (1) is too large, the stability of the crystal structure tends to decrease and the charge/discharge cycle characteristics of the all-solid-state secondary battery are likely to deteriorate. Accordingly, from the viewpoint of achieving favorable charge/discharge cycle characteristics of the all-solid-state secondary battery, the amount $\alpha$ of the element $M^1$ in the oxide represented by the general formula (1) is preferably 0.4x or less, or more specifically, more preferably 0.44 or less, and even more preferably 0.4 or less.

In the niobium composite oxide (B) represented by the general formula (1), the element A is at least one element out of Li and Na and is occluded by the niobium composite oxide (B) or released from the niobium composite oxide (B) (i.e., functions as a carrier) due to the all-solid-state secondary battery being charged and discharged. The niobium composite oxide (B) does not have to include the element A, but may include the element A. In a case where the niobium composite oxide (B) does not include the element A, ions of the element A are inserted into the oxide as a result of the all-solid-state secondary battery in which the oxide is used as a negative-electrode active material, for example, being charged or the oxide being pre-doped with ions of the element A before being used for the all-solid-state secondary battery, and thus the oxide contains the element A.

In the niobium composite oxide (B) represented by the general formula (1), the amount y of the element A is 0 or more and 24 or less.

In the niobium composite oxide (B) represented by the general formula (1), the amount of oxygen is originally 29 as in $AlNb_{11}O_{29}$, but may fluctuate due to the presence of the element $M^1$. Specifically, $\delta$ in the general formula (1) is preferably -1 or more and 2 or less, and more preferably 1.95 or less. When $\delta$ in the general formula (1) is more than 0, oxygen deficiency occurs in the oxide. In this case, the electron conductivity of the electrode active material containing the niobium composite oxide (B) and the conductivity of ions of the element A are improved, and thus, by using such an active material, it is possible to further increase the energy density of the all-solid-state secondary battery.

In the niobium composite oxide (B) represented by the general formula (1), $\delta$ relating to the amount of oxygen is determined such that the amounts of the elements $M^1$, $M^2$, Nb, and Al that form cations and the amount of oxygen that forms anions.

A more preferable form of the niobium composite oxide (A) and the niobium composite oxide (B) is an oxide satisfying the following general formula (2).

$$M^1{}_\alpha Al_{1-1.5\alpha} Nb_{11+0.5\alpha} O_{29-\delta} \qquad (2)$$

The element $M^1$ in the general formula (2) represents at least one of Zn and Cu, and $\alpha$ and $\delta$ satisfy $0 < \alpha \leq 0.4$ and $0 \leq \delta \leq 0.5\alpha$. The amount $\alpha$ of the element $M^1$ in the general formula (2) is preferably 0.05 or more and 0.4 or less, and more preferably 0.35 or less. In the general formula (2), $\delta$ relating to the amount of oxygen is 0 or more and $0.5\alpha$ or less. Since $\alpha$ satisfies $0 < \alpha \leq 0.4$ as described above, the value of $\delta$ is 0 or more and 0.2 or less.

The oxide that satisfies the general formula (2) satisfies the following general formula (3), for example, when Li ions are inserted.

$$Li_y M^1{}_\alpha Al_{1-1.5\alpha} Nb_{11+0.5\alpha} O_{29-\delta} \qquad (3)$$

In the general formula (3), the element $M^1$, the amount $\alpha$ of the element $M^1$, and $\delta$ relating to the amount of oxygen are the same as those in the general formula (2), and y satisfies $0 < y \leq 22$.

The niobium composite oxide (A) and the niobium composite oxide (B) can be used as the positive electrode active material or the negative electrode active material according to the type of active material used in a counter electrode for the electrode that contains these oxides. Accordingly, in the case where the electrode of the present invention is used as the positive electrode, the niobium composite oxide (A) and the niobium composite oxide (B) can also be used as the positive electrode active material. Also, in the case where the electrode of the present invention is used as the negative electrode, the niobium composite oxide (A) and the niobium composite oxide (B) can also be used as the negative electrode active material. Also, the lithium titanium oxide mentioned as an example of the negative electrode active material can also function as a positive electrode active material depending on the type of active material contained in the counter electrode, and thus the lithium titanium oxide mentioned above can also be used as the positive electrode active material in the case where the electrode of the present invention is used as the positive electrode.

In the case of a monoclinic niobium composite oxide (A) and a monoclinic niobium composite oxide (B), if crystallites are too fine, there is a risk that polarization may become large at the end of discharging of the all-solid-state secondary battery in which the electrode is used. Therefore, from the viewpoint of inhibiting such problems from arising and enabling the construction of an all-solid-state secondary battery with favorable characteristics, in the monoclinic niobium composite oxide (A) and the monoclinic niobium composite oxide (B), a ratio d/A of a crystallite size d ($\mu$m) in a b-axis direction to the average particle size $D_{50}$, that is, the A value, is preferably 0.12 or more, and more preferably 0.15 or more. Note that the upper limit of the d/A value is, for example, 0.7, from the viewpoint of suppressing plastic deformation of the electrodes caused by differences in the magnitude of expansion and contraction for each crystal orientation.

[Method for Producing Niobium Composite Oxide (A) and Niobium Composite Oxide (B)]

There is no particular limitation on the method for producing the niobium composite oxide (A) and the Niobium Composite Oxide (B). For example, a niobium composite oxide can be synthesized and produced using a solid-phase reaction method in which various types of metal oxides of constituent elements such as Nb, Al, Cu, and Zn are mixed and fired, or a reaction method in which a metal compound mixture prepared by co-precipitating a chloride or a nitrate of each metal and an alkoxide in a liquid phase is used as a precursor.

In the solid-phase reaction method, from the viewpoint of enhancing interdiffusion of various types of metal ions, the firing is performed at a temperature of preferably 800°C or higher, and more preferably 900°C to 1100°C. There is no particular limitation on the firing time, but the firing can be performed for 1 to 1000 hours. When the firing temperature is greater than 1100°C, the following problem may arise: oxygen is gradually released from a sample to generate a crystal phase other than a monoclinic crystal phase, or the composition no longer satisfies, for example, the general formula (1) and the general formula (2). For this reason, the time during which the firing temperature is maintained at 1100°C or higher is more preferably within 10 hours. There is no particular limitation on the cooling rate at which the sample is cooled during firing as long as a monoclinic crystal phase can be obtained. However, in order to obtain a stable monoclinic crystal phase in the above-described temperature range, the cooling rate is preferably 15°C/min to 60°C/min (including natural cooling). The sample may be quenched at a cooling rate of 1°C/sec to 1000°C/sec.

[Method for Determining Composition of Niobium Composite Oxide (A) and Composition of Niobium Composite Oxide (B)]

The composition of the niobium composite oxide (A) and the composition of niobium composite oxide (B) can be analyzed with use of, for example, inductively coupled plasma atomic emission spectroscopy (ICP-AES). In the case where it is difficult to perform quantification using ICP-AES due to a reason such as that the niobium composite oxide (A) and the niobium composite oxide (B) are sintered with an oxide-based solid electrolyte, and it is therefore difficult to separate each component, it is also possible to determine the composition using a combined method of various types of elemental analysis methods such as a combined method of a SEM or a transmission electron microscope (TEM) with an energy dispersive X-ray spectrometer (EDS) or a wavelength dispersive X-ray spectrometer (WDS).

[Method for Confirming Oxygen Deficiency in Niobium Composite Oxide (A) and Niobium Composite Oxide (B)]

Whether an oxygen deficiency has occurred in the niobium composite oxide (A) and the niobium composite oxide (B) can be confirmed by determining, using X-ray photoelectron spectroscopy analysis (XPS), whether a peak attributed to pentavalent Nb and a peak attributed to tetravalent Nb are present in a mixed manner in the composite oxide (confirmation was performed using this method in the Example section given later). By setting the C1s peak position of contaminated hydrocarbon on the sample surface to 284.6 eV, charge correction of binding energy of spectrum is performed to obtain an XPS spectrum in a binding energy range of 202 eV to 214 eV. Then, the background shape is estimated using the iterative Shirley method to remove background from the spectrum. The obtained spectrum is subjected to peak fitting using the Pseudo-Voigt function. Then, the area of a peak attributed to $Nb^{5+}$ of Nb3d3/2 (obtained at a position at which the binding energy is 209.8 eV to 210.2 eV) and the area of a peak attributed to $Nb^{4+}$ (the peak is obtained at a position at which the binding energy is smaller than the peak position attributed to 3d3/2 of $Nb^{5+}$ by 0.5 eV to 2 eV) are determined to calculate the average valence of Nb. Likewise, the area of a peak attributed to $Nb^{5+}$ of Nb3d5/2 (obtained at a position at which the binding energy is 206.6 eV to 207.1 eV) and the area of a peak attributed to $Nb^{4+}$ (the peak is obtained at a position at which the binding energy is smaller than the peak position attributed to 3d5/2 of $Nb^{5+}$ by 0.5 eV to 2 eV) are determined to calculate the average valence of Nb. The average valence of Nb calculated from Nb3d3/2 and the average valence of Nb calculated from Nb3d5/2 are averaged to determine the average valence of Nb contained in the active material.

The average valence of Cu can also be determined in the same manner as the average valence of Nb. An XPS spectrum in a binding energy range of 925 eV to 950 eV is obtained, and the area of a peak attributed to $Cu^{2+}$ of Cu2p3/2 (obtained at a position at which the binding energy is 932.7 eV to 934.6 eV) and the area of a peak attributed to $Cu^{+}$ (the peak is obtained at a position at which the binding energy is smaller than the peak position attributed to 2p3/2 of $Cu^{2+}$ by 0.5 eV to 2 eV) are determined to determine the average valence of Cu.

Next, the amount of each of various types of metal elements is quantified through inductively coupled plasma atomic emission spectrometry (ICP-AES). 5 mg of a sample is placed in a platinum crucible, and 5 ml of hydrofluoric acid, 10 ml of 50 mass% sulfuric acid are added thereto to perform thermal decomposition processing. In this way, a mixture of concentrated sulfuric acid and a fluoride of each of various types of metal elements is obtained (at this time, the hydrofluoric acid turns into white fumes and is removed). 2 ml of 30 mass% hydrogen peroxide solution is added to the obtained mixture, and then the sample is diluted with pure water to 100 ml using a volumetric flask. The obtained sample solution and a standard solution with a known concentration of each of various types of metal elements are alternately subjected to measurement three times. Then, the average values thereof are calculated, respectively, and the amount of metal element in the sample is determined from the ratio of the signal intensity of the sample solution relative to that of the standard solution.

Based on the average valences of Nb element and Cu element determined through XPS analysis (it is assumed that all Al exists in the form of $Al^{3+}$) and the amount of each of various types of metal elements determined through ICP-AES, the total charge amount of cations contained in the sample is calculated, and the amount of oxygen anions ($O^{2-}$) is calculated to be electrically neutral with respect to the total charge amount of cations obtained. Then, the difference with respect to the amount of oxygen anions when it is assumed that the niobium composite oxide does not have an oxygen deficiency is defined as oxygen deficiency amount $\delta$. Specifically, in the case of the niobium composite oxide represented by the general formula (2), the oxygen deficiency amount $\delta$ is the difference between the amount of oxygen when it is assumed that Al, Cu, and Nb contained in the sample are constituted by $Al^{3+}$, $Cu^{2+}$, and $Nb^{5+}$ and the amount of oxygen obtained using the above-described method.

The amount of oxygen in the sample may be directly quantified using a method in which the sample is placed in a graphite crucible, subjected to resistance heating in a helium stream to detect generated carbon dioxide using an infrared detector.

[Method for Confirming Monoclinic Structure of Niobium Composite Oxide (A) and Niobium Composite Oxide (B)]

The crystal structures of the niobium composite oxide (A) and the niobium composite oxide (B) can be determined by measuring a powder X-ray diffraction (powder XRD) pattern using RINT 2500 VPC (X rays used: CuKα rays) available from Rigaku Corporation, and checking it against the Powder Diffraction File (PDF) database or analyzing it using the Rietveld method. In the case of comparing crystal lattice sizes between different samples, an Si powder (available from Rigaku Corporation, $a_0$ = 5.4308 Å at 298.1 K) is mixed as an internal reference when preparing a sample for powder XRD measurement, and the spectrum is corrected such that a peak attributed to the (111) plane of Si on the X-ray diffraction pattern is $2\theta$ = 28.442 degrees. The lattice constant ($d_{010}$) of a unit lattice in the b axis direction can be calculated by setting the wavelength of X rays to 1.5418 Å, and doubling the lattice spacing determined from a peak attributed to the diffraction in the (020) plane. In the case where the niobium composite oxide (A) and the niobium composite oxide (B) are contained in the electrode (negative electrode) as the negative electrode active material, a powder XRD pattern of the electrode can be obtained by connecting a 1 kΩ resistor to the battery, subjecting the battery to constant resistance discharging for 100 hours, thereafter, taking out the negative electrode from the battery, flattening the electrode such that a surface opposing a bonding surface bonding to a current collector of the electrode is parallel to the current collector, and then fixing the electrode to the powder XRD sample stage. In the case where the niobium composite oxide (A) and the niobium composite oxide (B) are contained in the electrode (positive electrode) as the positive electrode active material, a powder XRD pattern of the electrode can be obtained by subjecting the battery to constant current charging at 10 μA to an upper limit voltage of 3 V and then holding the battery in a constant voltage state of 3 V for 100 hours, thereafter, taking out the positive electrode from the battery, and then, as in the case of the negative electrode, flattening the electrode such that a surface opposing a bonding surface bonding to a current collector of the electrode is parallel to the current collector, and then fixing the electrode to the powder XRD sample stage.

In the case where the niobium composite oxide (A) and the niobium composite oxide (B) are sintered with a crystalline sulfide-based solid electrolyte or an oxide-based solid electrolyte, the monoclinic structure of the niobium composite oxide can be confirmed by extracting a sample piece from a molded body of a sample containing the niobium composite oxide through FIB processing, placing the sample piece on a TEM sample stage to perform thin film processing to obtain a thin piece with a thickness of 100 nm or less, obtaining a selected area electron diffraction (SAED) pattern of the thin piece using a TEM, and analyzing the obtained pattern.

[Method for Measuring Crystallite size d in b-axis direction of Niobium Composite Oxide (A) and Niobium Composite Oxide (B)]

The crystallite size d in the b-axis direction of the niobium composite oxide (A) and the niobium composite oxide (B) is calculated by the following Scherrer equation by determining the full width at half maximum of a specific peak from the powder X-ray diffraction pattern of the niobium composite oxide obtained using the above method.

$$d = K\lambda/w\cos\theta$$

In the equation, d: crystallite size, K: Scherrer constant, $\lambda$: wavelength of X-ray, w: full width at half maximum, and $\theta$: Bragg angle.

When the space group of the niobium composite oxide (A) and the niobium composite oxide (B) is attributed to C2/m, the crystallite size d in the b-axis direction is determined from the peak of the (020) plane. When the space group of the niobium composite oxide is attributed to A2/m, the crystallite size d in the b-axis direction is determined from the peak of the (020) plane. Further, when the space group of the niobium composite oxide (A) and the niobium composite oxide (B) is attributed to I2/m, the crystallite size d in the b-axis direction is determined from the peak of the (020) plane.

In the case where the electrode of the present invention is used as the positive electrode, the amount of the electrode active material (positive electrode active material) contained in the electrode mixture (positive electrode mixture) is preferably 20 to 95 mass%.

On the other hand, in the case where the electrode of the present invention is used as the negative electrode, the amount of the electrode active material (negative electrode active material) contained in the electrode mixture (negative electrode mixture) is preferably 10 to 99 mass%.

Specific examples of the conductive assistant contained in the molded body made of the electrode mixture include carbon materials such as graphite (natural graphite, artificial graphite), graphene, carbon black, carbon nanofibers, and carbon nanotubes. The amount of the conductive assistant particles contained in the electrode mixture is preferably 1 to 10 mass%.

When the aspect ratio of a cross section of the conductive assistant is large in the molded body made of the electrode mixture, usually, it indicates that particles of the conductive assistant have been crushed and oriented during production of an electrode (when the molded body made of the electrode mixture is compressed and molded). In such a case, a conduction path extending in the thickness direction of the molded body made of the electrode mixture (a direction parallel to the compression direction during molding) may have been broken, and there is a risk that the effect of reducing the resistance of the electrode may be reduced. Therefore, for example, when a conductive assistant that does not have an elongate shape, such as graphite, graphene, or carbon black, is used, the aspect ratio of a cross section of the conductive assistant in the molded body made of the electrode mixture is preferably 3 or less. Note that the lower limit of the aspect ratio of a cross section of the conductive assistant in the molded body made of the electrode mixture is usually about 1.5, although the lower limit thereof depends on the shape of the conductive assistant used.

The aspect ratio of a cross section of the conductive assistant in the molded body made of the electrode mixture can be determined by setting "Shape descriptors" when performing the "Analyze Particles" operation on the conductive assistant particles to output the aspect ratios of the cross sections of the conductive assistant particles and calculating the average thereof (the values described in the Examples below were determined using this method).

There is no particular limitation on the solid electrolyte contained in the molded body made of the electrode mixture as long as the solid electrolyte has Li-ion conductivity, and for example, sulfide-based solid electrolytes, hydride-based solid electrolytes, halide-based solid electrolytes, oxide-based solid electrolytes, and the like can be used.

Examples of the sulfide-based solid electrolytes include particles of $Li_2S-P_2S_5$-based glass, $Li_2S-SiS_2$-based glass, $Li_2S-P_2S_5-GeS_2$-based glass, $Li_2S-B_2S_3$-based glass or the like. In addition, it is possible to use thio-LISICON-type sulfide-based solid electrolyte ($Li_{12-12a-b+c+6d-e}M^1_{3+a-b-c-d}M^2_bM^3_cM^4_dM^5_{12-e}X_e$ (where $M^1$ represents Si, Ge, or Sn, $M^2$ represents P or V, $M^3$ represents Al, Ga, Y, or Sb, $M^4$ represents Zn, Ca, or Ba, $M^5$ represents S or any one of S and O, X represents F, Cl, Br, or I, and a, b, c, d, and e satisfy $0 \le a < 3$, $0 \le b + c + d \le 3$, and $0 \le e \le 3$), such as $Li_{10}GeP_2S_{12}$ and $Li_{9.54}Si_{1.74}P_{1.44}S_{11.7}Cl_{0.3}$), and argyrodite-type sulfide-based solid electrolyte ($Li_{7-k}PS_{6-k}X_k$ (where X represents one or more halogen elements, and k satisfies $0.2 < k < 2.0$) such as $Li_6PS_5Cl$, $Li_{7-f+g}PS_{6-x}Cl_{x+y}$ (where f and g satisfy $0.05 \le f \le 0.9$, $-3.0f + 1.8 \le g \le -3.0f + 5.7$), $Li_{7-h}PS_{6-h}Cl_iBr_j$ (where h, i, and j satisfy $h = i + j$, $0 < h \le 1.8$, $0.1 \le i/j \le 10.0$)), which have attracted attention in recent years due to their high lithium-ion conductivity.

Examples of the hydride-based solid electrolytes include $LiBH_4$, and solid solutions of $LiBH_4$ and a following alkali

EP 4 657 537 A1

metal compound (e.g., solid solutions in which the mole ratio between $LiBH_4$ and the alkali metal compound is 1:1 to 20:1). As the alkali metal compound used in the above-mentioned solid solution, at least one selected from the group consisting of lithium halides (such as LiI, LiBr, LiF, and LiCl), rubidium halides (such as RbI, RbBr, RbF, and RbCl), cesium halides (such as CsI, CsBr, CsF, and CsCl), lithium amides, rubidium amides, and cesium amides can be used.

Examples of the halide-based solid electrolyte include monoclinic $LiAlCl_4$, defect spinel or layered $LiInBr_4$, and monoclinic $Li_{6-3m}Y_mX_6$ (where m satisfies $0 < m < 2$, and X = Cl or Br). It is also possible to use known solid electrolytes disclosed in WO 2020/070958 and WO 2020/070955.

Examples of the oxide-based solid electrolytes include $Li_2O-Al_2O_3-SiO_2-P_2O_5-TiO_2$-based glass ceramic material, $Li_2O-Al_2O_3-SiO_2-P_2O_5-GeO_2$-based glass ceramic material, $Li_3PO_4-Li_3BO_3-Li_2SO_4$-based glass, garnet-type $Li_7La_3Zr_2O_{12}$, NASICON-type $Li_{1+O}Al_{1+O}Ti_{2-O}(PO_4)_3$ and $Li_{1+p}Al_{1+p}Ge_{2-p}(PO_4)_3$, and perovskite-type $Li_{3q}La_{2/3-q}TiO_3$, inverted perovskite-type $Li_3HX(X = O, S, Se, or Te)$, and the like.

Among these solid electrolytes, it is preferable to use a sulfide-based solid electrolyte because of its high Li ion conductivity. It is more preferable to use a sulfide-based solid electrolyte that contains Li and P. In particular, it is even more preferable to use an argyrodite-type sulfide-based solid electrolyte that has high Li ion conductivity and high chemical stability.

From the viewpoint of reducing grain boundary resistance, the average particle size of the solid electrolyte is preferably 0.1 $\mu$m or more, and more preferably 0.2 $\mu$m or more. On the other hand, from the viewpoint of forming a sufficient contact interface between the positive electrode active material and the solid electrolyte, the average particle size of the solid electrolyte is preferably 10 $\mu$m or less, and more preferably 5 $\mu$m or less.

The term "the average particle size of the solid electrolyte" used in the specification of the present application refers to a 50% diameter value $(D_{50})$ in a volume-based cumulative fraction when an integral volume is obtained in order from the smallest particle size using a particles size distribution measurement apparatus (Microtrac HRA 9320 available from Nikkiso Co., Ltd., or the like).

In the case where the electrode of the present invention is used as the positive electrode, the amount of the solid electrolyte contained in the electrode mixture (positive electrode mixture) is preferably 4 to 80 mass%. In the case where the electrode of the present invention is used as the negative electrode, the amount of the solid electrolyte in the electrode mixture (negative electrode mixture) is preferably 4 to 85 mass%.

It is possible to add a binder to the molded body made of the electrode mixture. Specific examples thereof include fluororesins such as polyvinylidene fluoride (PVDF). Note that, for example, in a case where favorable moldability can be ensured when the molded body of the electrode mixture is formed without using a binder as in a case where a sulfide-based solid electrolyte is added to the molded body made of the electrode mixture, a binder does not need to be added to the molded body made of the electrode mixture.

In a case where a binder is required in the electrode mixture, the binder content is preferably 6% by mass or less, and preferably 0.5% by mass or more. On the other hand, in a case where moldability can be obtained without the need for a binder, the binder content is preferably 0.5% by mass or less, more preferably 0.3% by mass or less, and even more preferably 0% by mass (i.e., no binder is contained).

In the case where the electrode of the present invention is used as the positive electrode and includes a current collector, as the current collector, a foil, a punched metal, a mesh, an expanded metal, a foamed metal that are made of a metal such as aluminum, nickel, stainless steel, or the like; a carbon sheet; or the like can be used. Also, in the case where the electrode is used as the negative electrode and includes a current collector, as the current collector, a foil, a punched metal, a mesh, an expanded metal, a foamed metal that are made of a metal such as copper or nickel; a carbon sheet; or the like can be used.

The molded body of the electrode mixture can be formed by, for example, compressing an electrode mixture prepared by mixing an electrode active material, a solid electrolyte, conductive assistant, and the like through compression molding or the like.

In the case where the electrode includes a current collector, the electrode can be produced by attaching the molded body of the electrode mixture obtained using the above-described method to a current collector through press-bonding or the like.

Also, the molded body made of the electrode mixture may also be formed by mixing the above-described electrode mixture with a solvent to prepare an electrode mixture-containing composition, applying the electrode mixture-containing composition onto a substrate such as a current collector or a solid electrolyte layer to be placed to oppose the electrode, and then drying and pressing the substrate.

As the solvent used in the electrode mixture-containing composition, it is preferable to select a solvent that is less likely to deteriorate the solid electrolyte. In particular, a sulfide-based solid electrolyte and a hydride-based solid electrolyte cause a chemical reaction with a minute amount of water, and it is therefore preferable to use a non-polar aprotic solvent as typified by a hydrocarbon solvent such as hexane, heptane, octane, nonane, decane, decaline, toluene, xylene, mestyrene, or tetralin. In particular, it is more preferable to use a super dehydrated solvent with a water content of 0.001 mass% (10 ppm) or less. It is also possible to use a fluorine-based solvent such as Vertrel (registered trademark) available from Du Pont-Mitsui Fluorochemicals Co., Ltd., Zeorora (registered trademark) available from Zeon Corporation Japan, and Novec (registered trademark) available from Sumitomo 3M Ltd., and a non-aqueous organic solvent such as dichloromethane, diethyl ether, or anisole.

The thickness of the molded body made of the electrode mixture (in the case where the electrode includes a current collector, this refers to the thickness of the molded body of the electrode mixture per side of the current collector, and the same applies hereinafter) is usually 100 $\mu$m or more, and from the viewpoint of achieving a high capacity all-solid-state secondary battery, preferably 200 $\mu$m or more. Also, the thickness of the molded body of the electrode mixture is usually 3000 $\mu$m or less.

In the case where the electrode is produced by forming an electrode mixture layer on a current collector using an electrode mixture-containing composition that contains a solvent, the thickness of the electrode mixture layer is preferably 10 to 1000 $\mu$m.

<All-Solid-State Secondary Battery>

A non-aqueous electrolyte secondary battery according to the present invention includes a positive electrode, a negative electrode, and a solid electrolyte layer interposed between the positive electrode and the negative electrode, and at least one of the positive electrode and the negative electrode is the electrode for an all-solid-state secondary battery according to the present invention. As constituent elements other than the electrode, various types of constituent elements used in conventionally known all-solid-state secondary batteries can be used.

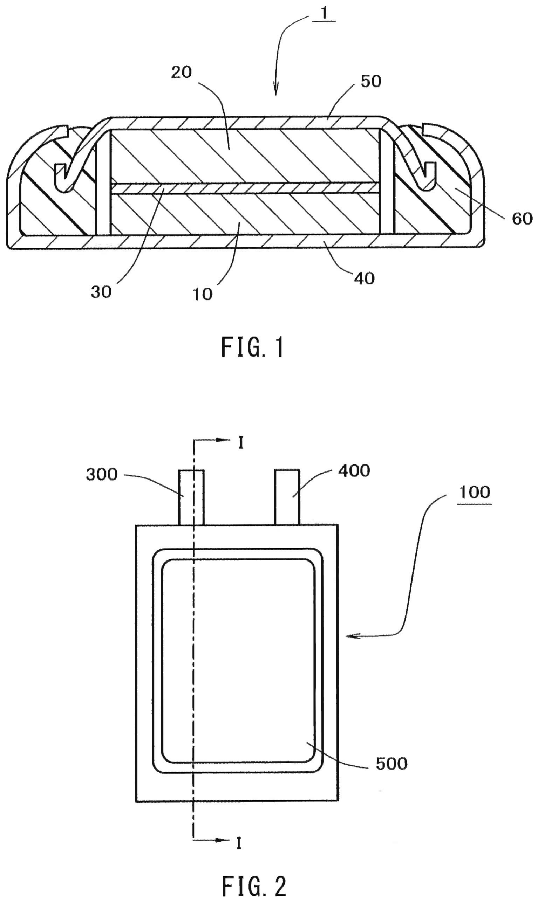

A cross-sectional view schematically showing an example of an all-solid-state secondary battery according to the present invention is shown in FIG. 1. An all-solid-state secondary battery 1 shown in FIG. 1 includes a positive electrode 10, a negative electrode 20, and a solid electrolyte layer 30 interposed between the positive electrode 10 and the negative electrode 20 that are enclosed in an exterior body formed of an exterior can 40, a sealing can 50, and a resin gasket 60 provided between the exterior can 40 and the sealing can 50.

The sealing can 50 is fitted to an opening of the exterior can 40 via the gasket 60, and an opening end of the exterior can 40 is squeezed inward, thereby causing the gasket 60 to abut against the sealing can 50. In this way, the opening of the exterior can 40 is sealed, and thus the inside of the battery has a hermetically sealed structure.

Stainless steel cans or the like can be used as the exterior can and the sealing can. Also, polypropylene, nylon, or the like can be used as the material of the gasket. Other than these, in a case where heat resistance is required depending on the application of the battery, it is also possible to use a heat resistant resin that has a melting point of greater than 240°C. Examples of the heat resistant resin include a fluororesin (such as a tetrafluoroethylene-perfluoroalkoxy ethylene copolymer (PFA)), polyphenylene ether (PPE), polysulfone (PSF), polyarylate (PAR), polyether sulfone (PES), polyphenylene sulfide (PPS), and polyether ether ketone (PEEK). In a case where the battery is used in applications where heat resistance is required, a glass hermetic seal can also be used for sealing.

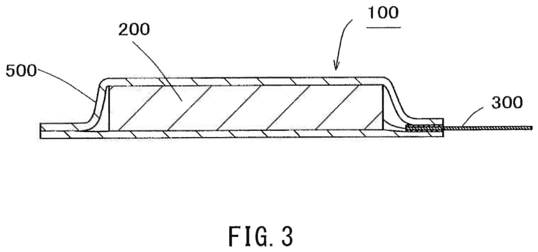

Also, FIGS. 2 and 3 schematically show another example of an all-solid-state secondary battery according to the present invention. FIG. 2 is a plan view of the all-solid-state secondary battery, and FIG. 3 is a cross-sectional view taken along the line I-I shown in FIG. 2.

An all-solid-state secondary battery 100 shown in FIGS. 2 and 3 houses an electrode body 200 in a laminate-film exterior body 500 formed of two metal laminate films. The laminate-film exterior body 500 is sealed at its outer circumferential portion by heat fusing the upper and lower metal laminate films.

The electrode body 200 is formed by stacking a positive electrode, a negative electrode, and a solid electrolyte layer interposed between the positive electrode and the negative electrode.

In FIG. 3, to avoid making the diagram complicated, the layers that constitute the laminate-film exterior body 500 and the constituent elements (the positive electrode, the negative electrode, and the like) that constitute the electrode body 200 are not shown in a distinguished manner.

The positive electrode included in the electrode body 200 is connected to a positive electrode external terminal 300 in the battery 100. Also, although not shown in the diagram, the negative electrode included in the electrode body 200 is also connected to a negative electrode external terminal 400 in the battery 100. One end of the positive electrode external terminal 300 and one end of the negative electrode external terminal 400 are drawn out of the laminate-film exterior body 500 so as to be connected to external devices and the like.

(Positive Electrode)

As the positive electrode of the all-solid-state secondary battery, the electrode of the present invention can be used. However, in the case where the electrode of the present invention is used as the negative electrode, a positive electrode that is different from the electrode of the present invention can also be used. Examples of the positive electrode that is different from the electrode of the present invention include a positive electrode that has the same configuration as that of the electrode of the present invention, except that the electrode active material whose $D_{90}$ does not satisfy the above value is contained, a positive electrode that has the same configuration as that of the electrode of the present invention, except that the B/A value does not satisfy the above value.

(Negative Electrode)

As the negative electrode of the all-solid-state secondary battery, the electrode of the present invention can be used. However, in the case where the electrode of the present invention is used as the positive electrode, a negative electrode that is different from the electrode of the present invention can also be used. Examples of the negative electrode that is different from the electrode of the present invention include a negative electrode that has the same configuration as that of the electrode of the present invention, except that the electrode active material whose $D_{90}$ does not satisfy the above value is contained, a negative electrode that has the same configuration as that of the electrode of the present invention, except that the B/A value does not satisfy the above value, a negative electrode that includes a lithium sheet or a lithium alloy sheet, and the like.

In the case of the negative electrode that includes a lithium sheet or a lithium alloy sheet, a negative electrode that includes only a lithium sheet or a lithium alloy sheet, or a negative electrode formed by attaching a lithium sheet or a lithium alloy sheet to a current collector can be used.

As an alloying element used in the lithium alloy, aluminum, lead, bismuth, indium, or gallium can be used, but it is preferable to use aluminum or indium. The proportion of the alloying element contained in the lithium alloy (in the case where the lithium alloy contains a plurality of types of alloying elements, the total proportion of the alloying elements) is preferably 50 atomic% or less (in this case, the remainder is lithium and inevitable impurities).

Also, in the case of the negative electrode that includes a lithium alloy sheet, using a stacked body prepared by stacking a alloying element-containing layer for forming a lithium alloy on the surface of a lithium layer (a lithium-containing layer) made of a lithium metal foil or the like through press-bonding, the stacked body may be brought into contact with a solid electrolyte in the battery to form a lithium alloy on the surface of the lithium layer, and used as the negative electrode. In the case of this negative electrode, a stacked body that includes an alloying element-containing layer on only one surface of the lithium layer may be used, or a stacked body that includes alloying element-containing layers on both surfaces of the lithium layer may be used. The stacked body can be formed by, for example, press-bonding a lithium metal foil and a foil made of an alloying element to each other.

Also, a current collector can also be used when a lithium alloy is formed in the battery and used as the negative electrode. For example, a stacked body that includes a lithium layer on one surface of a negative electrode current collector and an alloying element-containing layer on a surface of the lithium layer opposite to the negative electrode current collector may be used, or a stacked body that includes lithium layers on both surfaces of a negative electrode current collector and alloying element-containing layers each on the surface of the corresponding lithium layer that is opposite to the negative electrode current collector may be used. The negative electrode current collector and the lithium layer (lithium metal foil) may be stacked on each other through press-bonding or the like.

As the alloying element-containing layer included in the stacked body used as the negative electrode, for example, a foil or the like made of any of the alloying elements listed above can be used. The thickness of the alloying element-containing layer is preferably 1 $\mu$m or more, and more preferably 3 $\mu$m or more, and preferably 20 $\mu$m or less, and more preferably 12 $\mu$m or less.

As the lithium layer included in the stacked body used as the negative electrode, for example, a lithium metal foil or the like can be used. The lithium layer preferably has a thickness of 0.1 to 1.5 mm. Also, the sheet included in the negative electrode that includes a lithium sheet or a lithium alloy sheet preferably has a thickness of 0.1 to 1.5 mm.

Also, in the case where the negative electrode that includes a lithium sheet or a lithium alloy sheet includes a current collector, as the current collector, it is possible to use the same current collector as those listed above as examples of the current collector that can be used in the case where the electrode of the present invention is used as the negative electrode.

(Solid Electrolyte Layer)

As the solid electrolyte contained in the solid electrolyte layer interposed between the positive electrode and the negative electrode, it is possible to use one or more of the various types of sulfide-based solid electrolytes, hydride-based solid electrolytes, halide-based solid electrolytes, and oxide-based solid electrolytes listed above as examples of the solid electrolyte that can be used in the electrode. However, in order to make the battery characteristics more excellent, the solid electrolyte layer desirably contains a sulfide-based solid electrolyte, and more desirably an argyrodite-type sulfide-based solid electrolyte. It is even more desirable that all of the positive electrode, the negative electrode, and the solid electrolyte layer contain a sulfide-based solid electrolyte, and it is yet even more desirable that all of them contain an argyrodite-type sulfide-based solid electrolyte.

The solid electrolyte layer may include a porous body such as a resin nonwoven fabric as a support.

The solid electrolyte layer can be formed using any of the following methods: a method of compressing a solid electrolyte through compression molding or the like; a method of applying a solid electrolyte layer-forming composition prepared by dispersing a solid electrolyte in a solvent onto a substrate (including a porous body that serves as a support), the positive electrode, or the negative electrode, drying the composition, and performing compression molding such as pressing as needed; and the like.

As the solvent used in the solid electrolyte layer-forming composition, it is desirable to select a solvent that is less likely to deteriorate the solid electrolyte, and it is preferable to use any of the same solvents as those listed above as various examples of the solvent for the electrode mixture-containing composition.

The thickness of the solid electrolyte layer is preferably 10 to 500 $\mu$m.

(Electrode Body)

The positive electrode and the negative electrode can be used in the battery in the form of a stacked electrode body obtained by stacking the positive electrode and the negative electrode with a solid electrolyte layer interposed therebetween, or a wound electrode body obtained by spirally winding the stacked electrode body.

From the viewpoint of increasing the mechanical strength of the electrode body, it is preferable to form the electrode body by stacking the positive electrode, the negative electrode, and the solid electrolyte layer and then compression molding them.

(Battery Configuration)

The configuration of the all-solid-state secondary battery is not limited to the configuration that includes an exterior body composed of an exterior can, a sealing can, and a gasket as shown in FIG. 1 (i.e., a configuration generally called a coin type battery or a button type battery), or the configuration shown in FIGS. 2 and 3 that includes an exterior body formed using a resin film or a metal-resin laminate film, and the all-solid-state secondary battery may have a configuration that includes an exterior body that includes a bottomed cylindrical (circular-cylindrical or prismatic) exterior can made of a metal and a sealing structure that seals an opening of the exterior can.

Examples

Hereinafter, the present invention will be described in detail based on examples. However, the examples given below do not limit the scope of the present invention. Note that the values described below regarding the negative electrode produced in the examples and comparative examples, as well as the composition and crystal structure of the negative electrode active material, were all determined using the methods described above.

Example 1

<Production of Positive Electrode>

A reaction suppressing layer-forming coating solution was prepared by mixing 0.86 g of lithium and 38.7 g of pentaethoxyniobium in 394 g of dehydrated ethanol. Next, the reaction suppressing layer-forming coating solution was applied onto 1000 g of a positive electrode active material (LiCoO$_2$) at a rate of 2 g per min using a coating apparatus with a rolling fluidized bed. The obtained powder was subjected to heat treatment at 350°C to obtain a positive electrode material in which a reaction suppressing layer made of 2 parts by mass of LiNbO$_3$ relative to 100 parts by mass of the positive electrode active material was formed on the surface of the positive electrode material.

A positive electrode mixture was prepared by mixing the positive electrode material obtained above with vapor grown carbon fibers (as a conductive assistant) and Li$_6$PS$_5$Cl (as a sulfide-based solid electrolyte). The mixing ratio between the positive electrode material, the conductive assistant, and the sulfide-based solid electrolyte was 66:4:30 by mass. 112 mg of the positive electrode mixture was placed in a powder molding mold with a diameter of 7.5 mm, and molded at a pressure of 6000 kgf/cm$^2$ using a pressing machine. In this way, a positive electrode made of a circular-cylindrical positive electrode mixture molded body was produced.

<Formation of Solid Electrolyte Layer>

A solid electrolyte layer was formed on the positive electrode mixture molded body by placing 8 mg of the same sulfide-based solid electrolyte as that used in the positive electrode on the positive electrode mixture molded body in the powder molding mold, and molding it at a pressure of 1000 kgf/cm$^2$ using a pressing machine.

<Formation of Negative Electrode and Production of Stacked Electrode Body>

An active material was synthesized using various types of metal oxide powders (all obtained from Kojundo Chemical Lab. Co., Ltd.) as starting materials using a solid-phase reaction method. $Nb_2O_5$ (purity: > 99.9%) with an average particle size of 1 $\mu$m, $\alpha$-$Al_2O_3$ (purity: > 99.99%) with an average particle size of 1 $\mu$m, and CuO (purity: > 99.99%) were weighed to 96.72 g, 2.34 g, and 1.04 g, respectively, and then mixed. The mixture of the starting materials was placed in a zirconia container with an internal volume of 500 ml together with 70 g of ethanol and 300 g of YSZ balls with a diameter of 2 mm, and mixed at 300 rpm for 6 hours using a planetary ball mill (Planetary Mill Pulverisette 5 (product name) available from Fritsch GmbH). Zirconia balls were separated from the mixed sample to obtain a slurry, and the slurry was dried to obtain a negative electrode active material precursor powder. The precursor powder was transferred to an alumina crucible and then fired by increasing the temperature to 900°C in an air atmosphere at a temperature increase rate of 16°C/min, and maintaining the temperature for 8 hours. After that, the precursor powder was naturally cooled to room temperature. The obtained powder was crushed for 5 minutes using a mortar, and sieved using a sieve with a mesh size of 150 $\mu$m to obtain a crude product of active material. 4 g of the crude product of active material was placed in a zirconia container with an internal volume of 12.5 ml together with 4 g of ethanol and 30 g of YSZ balls with a diameter of 2 mm, and crushed at 300 rpm for 6 hours using the above-described planetary ball mill. The obtained slurry was dried under reduced pressure at 60°C overnight to obtain particles of a negative electrode active material $Cu_{0.2}Al_{0.74}Nb_{11.05}O_{27.89}$.

A powder XRD pattern of the obtained negative electrode active material was measured, and it was confirmed that the negative electrode active material had a monoclinic crystal structure and belonged to the C2/m space group.

The negative electrode active material, graphene (conductive assistant), and the sulfide-based solid electrolyte ($Li_6PS_5Cl$) were mixed at a mass ratio of 69:6.1:24.9, and kneaded in an argon atmosphere for 1 hour using an automatic mortar (Mortar Grinder P-2 (product name) available from Fritsch GmbH) to prepare a negative electrode mixture. Next, 62 mg of the negative electrode mixture was placed on the solid electrolyte layer in the powder molding mold, and molded at a pressure of 14000 kgf/cm$^2$ using a pressing machine to form a negative electrode constituted by a negative electrode mixture molded body on the solid electrolyte layer. In this way, a stacked electrode body in which the positive electrode, the solid electrolyte layer, and the negative electrode were stacked was produced.

Note that in the obtained negative electrode (negative electrode mixture molded body), the $D_{90}$ and $D_{50}$ (A value) of the negative electrode active material were 0.67 $\mu$m and 0.46 $\mu$m, respectively, the $D_{50}$ (B value) of the conductive assistant was 0.55 $\mu$m, and the B/A value was 1.20. Also, the aspect ratio of a cross section of the conductive assistant in the negative electrode was 2.6. Further, the crystallite size d in the b-axis direction of the negative electrode active material was 81 nm, and the d/A value was 0.18.

<Assembly of All-Solid-State Secondary Battery>

A flexible graphite sheet PERMA-FOIL (product name) with a thickness of 0.1 mm and an apparent density of 1.1 g/cm$^3$ available from Toyo Tanso Co., Ltd. was punched into two sheets of the same size as that of the stacked electrode body. One of the obtained two graphite sheets was placed on the inner bottom of a stainless steel sealing can in which a polypropylene annular gasket was fitted. Next, the stacked electrode body was placed on the graphite sheet, with the negative electrode facing the graphite sheet, and the other graphite sheet was placed on the stacked electrode body. Furthermore, the sealing can was covered with a stainless steel exterior can, and then sealed by inwardly crimping the opening end of the exterior can. In this way, a flat-shaped all-solid-state secondary battery with a diameter of about 9 mm in which one of the graphite sheets was placed between the inner bottom of the sealing can and the stacked electrode body, and the other one of the graphite sheets was placed between the inner bottom of the exterior can and the stacked electrode body was obtained.

Example 2

A negative electrode active material was produced in the same manner as in Example, except that the firing temperature of the negative electrode active material was changed to 950°C, and a flat all-solid-state secondary battery was produced in the same manner as in Example 1, except that the negative electrode active material was used.

Note that in the negative electrode (negative electrode mixture molded body) in the stacked electrode body used in the battery of Example 2, the $D_{90}$ and $D_{50}$ (A value) of the negative electrode active material were 0.77 $\mu$m and 0.49 $\mu$m, respectively, the $D_{50}$ (B value) of the conductive assistant was 0.52 $\mu$m, and the B/A value was 1.06. Also, the aspect ratio of a cross section of the conductive assistant in the negative electrode was 2.7. Further, the crystallite size d in the b-axis direction of the negative electrode active material was 78 nm, and the d/A value was 0.16.

Example 3

A negative electrode active material was produced in the same manner as in Example 1, except that the size of the YSZ balls added when a mixture of the starting materials was mixed was set to a diameter of 5 mm, the conditions under which the mixture of the starting materials was mixed were 250 rpm for 3 hours, and the firing conditions were set such that the mixture was kept at 1000°C for 4 hours, the size of the YSZ balls added when the crude product was crushed was set to a diameter of 5 mm, the conditions under which the crude product was crushed were 250 rpm for 3 hours. A negative electrode mixture was prepared in the same manner as in Example 1, except that the composition was changed to a mass ratio of the negative electrode active material:graphene:solid electrolyte = 69:5.5:25.5, and a flat all-solid-state secondary battery was produced in the same manner as in Example 1, except that the negative electrode mixture was used.

Note that in the negative electrode (negative electrode mixture molded body) in the stacked electrode body used in the battery of Example 3, the $D_{90}$ and $D_{50}$ (A value) of the negative electrode active material were 1.23 $\mu$m and 0.75 $\mu$m, respectively, the $D_{50}$ (B value) of the conductive assistant was 0.33 $\mu$m, and the B/A value was 0.44. Also, the aspect ratio of a cross section of the conductive assistant in the negative electrode was 2.8. Further, the crystallite size d in the b-axis direction of the negative electrode active material was 97 nm, and the d/A value was 0.13.

Comparative Example 1

A negative electrode mixture was prepared in the same manner as in Example 3, except that the time period in which the negative electrode active material, the solid electrolyte, and graphene were mixed was changed to 20 minutes, and a flat all-solid-state secondary battery was produced in the same manner as in Example 1, except that the negative electrode mixture was used.

Note that in the negative electrode (negative electrode mixture molded body) in the stacked electrode body used in the battery of Comparative Example 1, the $D_{90}$ and $D_{50}$ (A value) of the negative electrode active material were 2.40 $\mu$m and 1.01 $\mu$m, respectively, the $D_{50}$ (B value) of the conductive assistant was 3.99 $\mu$m, and the B/A value was 3.95. Also, the aspect ratio of a cross section of the conductive assistant in the negative electrode was 3.3. Further, the crystallite size d in the b-axis direction of the negative electrode active material was 97 nm, and the d/A value was 0.10.

Comparative Example 2

A negative electrode mixture was prepared in the same manner as in Example 1, except that the negative electrode active material was changed to that used in Example 3 and the negative electrode mixture was changed to a composition of negative electrode active material:graphene:solid electrolyte = 69:9.4:21.6, and a flat all-solid-state secondary battery was produced in the same manner as in Example 1, except that the negative electrode mixture was used.

Note that in the negative electrode (negative electrode mixture molded body) in the stacked electrode body used in the battery of Comparative Example 2, the $D_{90}$ and $D_{50}$ (A value) of the negative electrode active material were 1.38 $\mu$m and 0.78 $\mu$m, respectively, the $D_{50}$ (B value) of the conductive assistant was 1.44 $\mu$m, and the B/A value was 1.85. Also, the aspect ratio of a cross section of the conductive assistant in the negative electrode was 2.6. Further, the crystallite size d in the b-axis direction of the negative electrode active material was 97 nm, and the d/A value was 0.12.

<Impedance Evaluation>

As for the flat all-solid-state secondary batteries of the examples and comparative examples, the impedance was measured using the following method, and internal resistance was evaluated. Each of the batteries was subjected to constant current charging at a current value of 0.04 C to a voltage of 3.2 V, then constant voltage charging to a current value of 0.01 C, and thereafter constant current discharging at a current value of 0.04 C to a voltage of 1.0 V. Thereafter, each battery was subjected to constant current charging under the same conditions as above until the capacity reached 5 mAh, the open circuit voltage was measured for 10 minutes, and in this state, the impedance was measured at 1 Hz with an effective AC voltage of 10 mV.

<Output Characteristics Evaluation>

After the impedance measurement, each battery was subjected to constant current charging at a current value of 0.04 C to a voltage of 3.2 V, constant voltage charging to a current value of 0.01 C, open end voltage measurement for 1 hour, and constant current discharging at a current value of 0.05 C to a voltage of 1.0 V to measure 0.05 C discharge capacity. Next, the battery was subjected to open end voltage measurement for 1 hour, and constant current discharging at a current value of 0.01 C to a voltage of 1.0 V. Then, the sum of the obtained discharge capacity and the 0.05 C discharge capacity was defined as 0.01 C discharge capacity.

Then, the output characteristics of the battery were evaluated by calculating the ratio of the 0.05 C discharge capacity relative to the 0.01 C discharge capacity being set to 100% (0.05 C/0.01 C discharge capacity retention rate).

Physical properties of constituent components of the negative electrode are shown in Table 1, and the evaluation results are shown in Table 2.

[Table 1]

| | Negative Electrode Active Material | | | | Conductive Assistant | | B/A |
|---|---|---|---|---|---|---|---|
| | $D_{90}$ (μm) | A($D_{50}$) (μm) | d (nm) | d/A | B ($D_{50}$) (μm) | Aspect Ratio | |
| Ex. 1 | 0.67 | 0.46 | 81 | 0.18 | 0.55 | 2.6 | 1.20 |
| Ex. 2 | 0.77 | 0.49 | 78 | 0.16 | 0.52 | 2.7 | 1.06 |
| Ex. 3 | 1.23 | 0.75 | 97 | 0.13 | 0.33 | 2.8 | 0.44 |
| Comp. Ex. 1 | 2.40 | 1.01 | 97 | 0.10 | 3.99 | 3.3 | 3.95 |
| Comp. Ex. 2 | 1.38 | 0.78 | 97 | 0.12 | 1.44 | 2.6 | 1.85 |

[Table 2]

| | Impedance (Ω) | Load Properties (%) |
|---|---|---|
| Ex. 1 | 69 | 96.2 |
| Ex. 2 | 74 | 95.7 |
| Ex. 3 | 107 | 94.3 |
| Comp. Ex. 1 | 419 | 72.0 |
| Comp. Ex. 2 | 162 | 88.3 |

As shown in Tables 1 and 2, the flat all-solid-state secondary batteries of Examples 1 to 3, which had the negative electrodes in which the negative electrode active materials had appropriate $D_{90}$ and B/A values, had lower impedance and reduced internal resistance, compared to the batteries of Comparative Examples 1 and 2, which had inappropriate $D_{90}$ and B/A values.

Also, the output characteristics of the flat all-solid-state secondary batteries of Examples 1 to 3 were superior to those of the batteries of Comparative Examples 1 and 2.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

Industrial Applicability

The all-solid-state secondary battery according to the present invention has a low internal resistance and excellent output characteristics. Accordingly, the all-solid-state secondary battery of the present invention can be preferably used in applications where the above-described characteristics are required, and is also applicable to other applications where conventionally known all-solid-state secondary batteries are used. The electrode for all-solid-state secondary battery according to the present invention can constitute the all-solid-state secondary battery according to the present invention.

Description of Reference Numerals

1, 100    All-solid-state secondary battery
10         Positive electrode
20         Negative electrode
30         Solid electrolyte layer

| | |
|---|---|
| 40 | Exterior can |
| 50 | Sealing can |
| 60 | Gasket |
| 200 | Electrode body |
| 300 | Positive electrode external terminal |
| 400 | Negative electrode external terminal |
| 500 | Laminate-film exterior body |

**Claims**

1. An electrode for an all-solid-state secondary battery, the all-solid-state secondary battery having a solid electrolyte layer, the electrode comprising:

   a molded body made of an electrode mixture that comprises an electrode active material, a conductive assistant, and a solid electrolyte,
   wherein the electrode active material has a particle size $D_{90}$ of 1.5 $\mu$m or less, and
   $0.4 \leq B/A \leq 1.5$ is satisfied, where A ($\mu$m) is an average particle size $D_{50}$ of the electrode active material, and B ($\mu$m) is an average particle size $D_{50}$ of the conductive assistant.

2. The electrode for an all-solid-state secondary battery according to claim 1, comprising a niobium composite oxide comprising at least two elements selected from the group consisting of Cu, Zn, Al, W, Fe, and Ti as the electrode active material.

3. The electrode for an all-solid-state secondary battery according to claim 2, wherein the niobium composite oxide is a monoclinic niobium composite oxide, and a ratio d/A of a crystallite size d ($\mu$m) in a b-axis direction to A ($\mu$m), which is the average particle size $D_{50}$, is 0.12 or more.

4. The electrode for an all-solid-state secondary battery according to claim 1, comprising

   a niobium composite oxide as the electrode active material, the niobium composite oxide having a monoclinic crystal structure and satisfying a general formula (1) below,

   $$A_y M^1{}_\alpha Al_{x-\alpha} Nb_{12-x-z} M^2{}_z O_{29-\delta} \qquad (1)$$

   where, in the general formula (1), A represents at least one element out of Li and Na, $M^1$ represents at least one element selected from the group consisting of Fe, Mn, Zn, Cu, Ag, Mg, Ca, Sr, Ba, Co, Eu, Y, Bi, La, Ce, Nd, Sm, and Gd, and $M^2$ represents at least one element selected from the group consisting of K, Ti, Ni, Zr, V, Mo, Ta, and W, and x, y, z, $\delta$, and $\alpha$ satisfy $0 < x \leq 1.1$, $0 \leq y \leq 24$, $0 \leq z \leq 2$, $-1 \leq \delta \leq 2$, and $0 < \alpha \leq 0.4x$.

5. The electrode for an all-solid-state secondary battery according to claim 4, wherein in the niobium composite oxide, a ratio d/A of a crystallite size d ($\mu$m) in a b-axis direction to A ($\mu$m), which is the average particle size $D_{50}$, is 0.12 or more.

6. The electrode for an all-solid-state secondary battery according to claim 1, wherein an aspect ratio of a cross section of the conductive assistant is 3 or less.

7. An all-solid-state secondary battery comprising:

   a positive electrode;
   a negative electrode; and
   a solid electrolyte layer interposed between the positive electrode and the negative electrode,
   wherein at least one of the positive electrode and the negative electrode is the electrode for an all-solid-state secondary battery according to any one of claims 1 to 6.

FIG. 1

FIG. 2

FIG. 3

# EP 4 657 537 A1

## INTERNATIONAL SEARCH REPORT

International application No.

**PCT/JP2023/046862**

### A. CLASSIFICATION OF SUBJECT MATTER

*H01M 4/13*(2010.01)i; *H01M 4/62*(2006.01)i; *H01M 4/131*(2010.01)i; *H01M 4/485*(2010.01)i; *H01M 4/505*(2010.01)i; *H01M 4/525*(2010.01)i; *H01M 10/052*(2010.01)i; *H01M 10/0562*(2010.01)i
FI:  H01M4/13; H01M10/0562; H01M10/052; H01M4/62 Z; H01M4/485; H01M4/131; H01M4/505; H01M4/525

According to International Patent Classification (IPC) or to both national classification and IPC

### B. FIELDS SEARCHED

Minimum documentation searched (classification system followed by classification symbols)

H01M4/13; H01M4/62; H01M4/131; H01M4/485; H01M4/505; H01M4/525; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-172995 A (NISSAN MOTOR CO., LTD.) 29 June 2006 (2006-06-29) paragraphs [0012], [0018], [0034], [0176] | 1, 6-7 |
| Y | paragraphs [0012], [0018], [0034], [0176] | 1, 6-7 |
| Y | JP 2021-114407 A (SUMITOMO CHEMICAL COMPANY, LIMITED) 05 August 2021 (2021-08-05) paragraphs [0023], [0024], [0101], [0102] | 1, 6-7 |
| A | JP 2019-169399 A (KABUSHIKI KAISHA TOSHIBA) 03 October 2019 (2019-10-03) paragraphs [0022]-[0039], [0064] | 1-7 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

21

## INTERNATIONAL SEARCH REPORT
### Information on patent family members

International application No.

**PCT/JP2023/046862**

| Patent document cited in search report | | | Publication date (day/month/year) | Patent family member(s) | | | Publication date (day/month/year) |
|---|---|---|---|---|---|---|---|
| JP | 2006-172995 | A | 29 June 2006 | (Family: none) | | | |
| JP | 2021-114407 | A | 05 August 2021 | US<br>paragraphs [0078]-[0082],<br>[0184], [0185]<br>EP<br>CN<br>KR | 2023/0048124<br><br><br>4091989<br>115023831<br>10-2022-0130112 | A1<br><br><br>A1<br>A<br>A | |
| JP | 2019-169399 | A | 03 October 2019 | US<br>paragraphs [0031]-[0048],<br>[0085]<br>CN | 2019/0296346<br><br><br>110364724 | A1<br><br><br>A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10199507 A
- JP 2013033641 A
- JP 2021044195 A
- WO 2020070958 A
- WO 2020070955 A